# EUROPÄISCHE PATENTSCHRIFT

(11) **EP 1 216 462 B1**
(45) Veröffentlichungstag und Bekanntmachung des Hinweises auf die Patenterteilung: **23.11.2005**
(21) Anmeldenummer: 00982933.4
(22) Anmeldetag: 28.09.2000
(51) Int. Cl.: G07F 7/10

(54) **VERFAHREN ZUR ABRECHNUNG VON INTERNET-DIENSTLEISTUNGEN ÜBER MOBILFUNK**
METHOD FOR CHARGING INTERNET SERVICES VIA A MOBILE TELEPHONE
PROCEDE DE FACTURATION DE SERVICES INTERNET PAR TELEPHONIE MOBILE

(30) Priorität: 28.09.1999 DE 19946537
(43) Veröffentlichungstag der Anmeldung: 26.06.2002
(73) Patentinhaber: T-Mobile Deutschland GmbH, 53227 Bonn (DE)
(72) Erfinder: BRUNE, Peter, 53340 Meckenheim (DE); LJUNGSTRÖM, Patrik, 53639 Königswinter (DE); MICHEL, Uwe, 53604 Bad Honnef (DE); RASS, Jörg, 50859 Köln (DE); SCHMICKLER, Leonhard, 53229 Bonn (DE)
(74) Vertreter: Riebling, Peter
(86) Internationale Anmeldenummer: PCT/DE2000/003421
(87) Internationale Veröffentlichungsnummer: WO 2001/024122

(56) Entgegenhaltungen:
- EP-A- 0 917 327
- WO-A-96/41286
- WO-A-99/33034
- WO-A-99/45684
- WO-A-99/48312
- US-A- 5 899 982

## Beschreibung

Die Erfindung betrifft ein Verfahren zur Nutzung und Abrechnung von Internet-Dienstleistungen über Mobilfunk.

Aus dem Stand der Technik sind Verfahren zur Abrechnung von Internet-Dienstleistungen über ein Internet-Terminal (z.B. einen Personal Computer) bekannt. Bisher im Internet bekannte Verfahren sehen das Halten oder Laden der Kundendaten im Internet-Terminal oder beim Händler vor. Dies ist jedoch bei der Verwendung von Mobilfunkendgeräten als Internet-Terminal nicht praktikabel.

Die EP-A-0 917 327 offenbart ein Verfahren zur Abrechnung von Internet Dienstleistungen, bei dem die Abrechnung zentral beim Internet Service Provider durchgeführt wird. Beim Service Provider ist eine spezielle Zahlungseinrichtung vorgesehen, die verschiedene Zahlungsverfahren und elektronische Geldwerte unterstützt. Die Zahlungseinrichtung empfängt Zahlungsanforderungen eines Händlers an einen Nutzer. Nach Freigabe der Zahlungsanforderung durch den Nutzer wird dessen Konto oder Telefonrechnung von der Zahlungseinrichtung mit einem entsprechenden Betrag belastet und der Betrag In Form von elektronischen Geldwerten an den Händler übermittelt.

Die WO-A-99 33034 lehrt ein Verfahren zur Steuerung von Finanztransaktionen über ein mobiles Kommunikationssystem, bei dem ein Nutzer z.B. über sein Mobilfunktelefon Zahlungstransaktionen an beliebigen Händlerterminals (Points of Sale) freigeben und durchführen kann. Der zu zahlende Betrag wird z.B. vom Konto des Nutzes abgebucht und dem Händler gutgeschrieben.

Der Erfindung liegt folgende Aufgabe zugrunde (Problem):
Ein Verfahren anzugeben, mit welchem insbesondere eine Abrechnung von Internet-Dienstleistungen schnell und sicher über Mobilfunk ermöglicht wird.

Gelöst wird diese Aufgabe durch die in den unabhängigen Patentansprüchen angegeben Merkmale.

Ein Mobilfunkkunde bezahlt beim Surfen im Internet z.B. mittels eines WAP-fähigen Endgeräts (Wireless Application Protocol) für bestimmte Inhalte (Information, Datenbankrecherche, Fahrplanauskunft, Spiele, etc) jeweils einen geringen Einzelbetrag. Dieser kann erfindungsgemäß über das Mobilfunknetz effizient und sicher abgerechnet werden.

### Vorteile gegenüber dem Stand der Technik

Bei bisher im Internet bekannten Micropayment-Verfahren wird das Micropayment-Konto bei der Bank des Kunden eingerichtet und dem Kunden In Form einer elektronischen Geldbörse auf dem Personal Computer zur Verfügung gestellt. Dies ist bei Mobilfunkgeräten mit eingeschränkter Leistung nicht möglich.

Das erfindungsgemäße Reservierungsverfahren erlaubt die Abrechnung von Kleinstbeträgen mit einem minimalen Kommunikationsaufwand. Andererseits hat der Kunde über die Autorisierung jederzeit eine Kostenkontrolle.

Sensible Daten bleiben im sicheren Mobilfunk-Netz und werden nicht über das Internet übertragen, daher sind keine zusätzlichen Verschlüsselungsverfahren erforderlich. Der Kunde ist im Mobilfunk-Netz über seine MSISDN bekannt. Daher ist kein zusätzliches Authentifikationsverfahren erforderlich.
Dennoch ist die Anonymität des Kunden gegenüber dem Anbieter gewährleistet.
Figur 1 zeigt ein Beispiel für eine erfindungsgemäße Systemarchitektur
Figur 2 zeigt ein Beispiel für den Ablauf einer Bezahltransaktion

Fünf Parteien sind an der Durchführung der Abrechnung beteiligt: Kunde, Anbieter, Payment-Gateway, Micropayment-Bank und Banknetz.

Der Kunde verfügt über ein internetfähiges (WAP-fähiges) Mobilfunkendgerät 1 und hat über das Mobilfunknetz 2 Zugang zum Internet 3.

Der Anbieter hat seine in einem Anbieter-Server 4 vorhandene Standard-Internet-Server-Software um ein Interface zu einem Payment-Gateway 5 erweitert. Der Inhalt der Angebote (Information, Spiele, Datenbankrecherche, etc) ist in einer auf das Mobilfunkendgerät 1 abgestimmten Darstellung abrufbar.

Das Payment-Gateway 5 hält in einer Payment-Datenbank 6 als Kundendaten die MSISDN des Mobilfunk-Nutzers, die Kontonummer eines Micropayment-Kontos 7 des Kunden und dessen aktuelles Guthaben. Das Payment-Gateway kann über eine Abfrage einer MSISDN-IP-Datenbank 8 die zu einer temporären IP-Adresse gehörende MSISDN ermitteln.

Das Micropayment-Konto 7 wird als Unterkonto eines realen Bankkontos bei einer Bank geführt. Payment-Gateway 5 und Micropayment-Konto 7 sind durch Datenbankabgleich ständig synchronisiert. Das Micropayment-Konto 7 kann vorausbezahlt sein (Prepaid) oder per Lastschrift reguliert werden (Postpaid). Der Kunde hat über das Internet 3 jederzeit Zugriff auf den aktuellen Kontostand und die laufenden Buchungen auf dem Konto 7. Abbuchungen vom Micropayment-Konto 7 auf Anbieterkonten anderer Banken 9 erfolgen über das Bankennetz 10 gesammelt über einen Zeitraum (z.B. Tag, Woche, Monat).

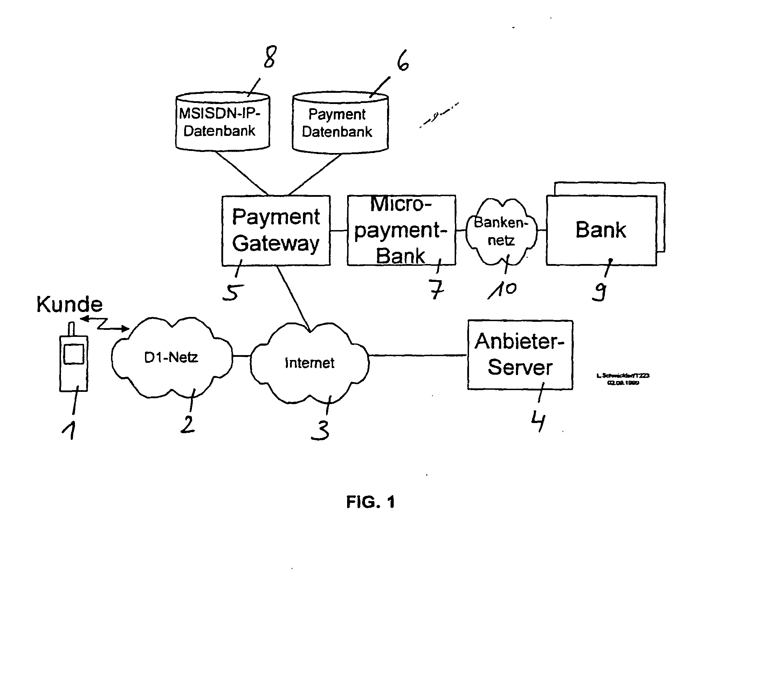

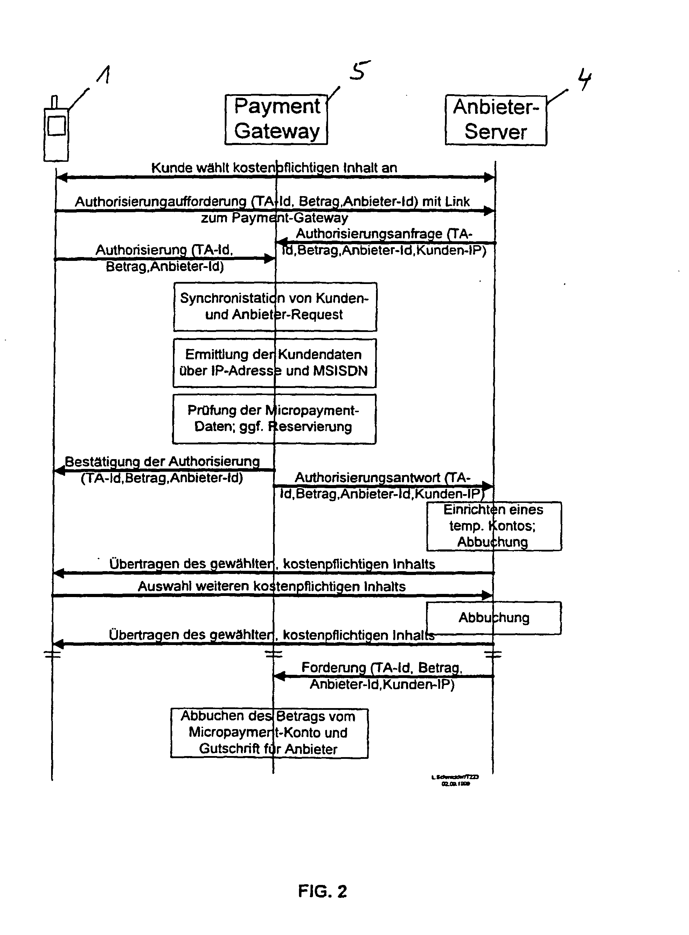

### Ablaufbeschreibung anhand der Figuren 1 und 2

Wenn ein Mobilfunk-Internet-Nutzer beim einem Vertragsanbieter des Mobilfunk-Betreibers surft, so erkennt der Anbieter anhand des IP-Adressbereichs des Nutzers, um welchen Betreiber es sich handelt.

Der Mobilfunk-Internet-Nutzer erhält beim Surfen an einer bestimmten Stelle die Information, dass ein Inhalt kostenpflichtig ist. Dabei legt der Anbieter fest, ob die Kosten pro Zeiteinheit oder pro Klick entstehen. Wählt der Nutzer diesen Inhalt an, so wird er aufgefordert die Bezahlung von Inhalten bis zu einem Höchstbetrag zu autorisieren. Diese vom Anbieter geschickte Aufforderung enthält die Transaktionsdaten (Transaktions-Id, Betrag, die Anbieter-Id) und einen Link auf das Payment-Gateway 5. Der Anbieter schickt die gleichen Daten erweitert um die temporäre IP-Adresse des Mobilfunk-Internet-Nutzers an das Payment-Gateway 5. Klickt der Nutzer OK an, so werden die Transaktionsdaten von seinem Endgerät 1 ebenfalls zum Payment-Gateway 5 übertragen. Der Kunde kann diese Aktion mit einer Bezahl-PIN sichern.

Das Payment-Gateway 5 synchronisiert die beiden Nachrichten und prüft sie auf Übereinstimmung. Nutzer-IP-Adresse, TA-Id, Betrag und Anbieter-Id müssen identisch sein. Über die Nutzer-IP-Adresse ermittelt das Payment-Gateway 5 die MSISDN des Mobilfunk-Internet-Nutzers und sucht mit dieser die zugehörigen in der Payment-Datenbank 6 abgelegten Kundendaten. Das Payment-Gateway 5 versucht nun den angefragten Betrag auf dem Micropayment-Konto zu reservieren. Dabei kann im Prepaid-Fall das Guthaben geprüft werden, im Postpaid-Fall ein Kredit-Limit. Auch ein vom Kunden definierter Höchstbetrag je Zeitraum (z.B. 100 DM/Monat) kann geprüft werden.
Ist das Prüfergebnis positiv, erhält der Anbieter die Autorisierung für den angeforderten Betrag und kann über diesen verfügen. So lange der Mobilfunk-Internetnutzer im Server 4 des Anbieters bleibt kann er kostenpflichtigen Inhalt ohne weitere Zahlungs-Autorisierung nutzen. Der Anbieter bucht die Kleinstbeträge von dem ihm übertragenen Betrag ab. Sollte dieser erschöpft sein, so kann der Anbieter eine erneute Autorisierung anstoßen. Erst wenn der Nutzer den Server des Anbieters über einen bestimmten Zeitraum nicht mehr genutzt hat, wird der Vorgang abgeschlossen und die Forderung(en) jeweils mit TA-Id, Betrag, Anbieter-Id und IP-Adresse des Nutzers an das Payment-Gateway übertragen. Der Anbieter kann dem Kunden den aktuellen Stand der Forderung in jede Seite, die er zum Kunden überträgt, einblenden.

Das Payment-Gateway 5 ordnet die tatsächlichen Forderungen den Reservierungen zu und bucht die Beträge vom Micropayment-Konto 7 zu Gunsten des Anbieters ab. Die entsprechenden Reservierungen werden gelöscht. Der tatsächliche Zahlungsfluß auf das Empfängerkonto des Anbieters kann später gebündelt erfolgen. Die Reservierung werden vom Payment-Gateway 5 auch gelöscht, wenn innerhalb eines definierten Zeitraums keine Forderung mit der entsprechenden TA-Id vom Anbieter eingetroffen ist.

Der Kunde richtet sein Micropayment-Konto 7 bei der Micropayment-Bank des Mobilfunk-Betreibers ein. Das Konto ist in der Regel vorausbezahlt, es sei denn der Kunde erfüllt die Bonitätsanforderungen des Mobilfunk-Betreibers. Der Kunde kann jederzeit über das Internet Gut-Buchungen auf sein Micropayment-Konto durchführen und die Buchungen kontrollieren.

Bei geringeren Sicherheitsanforderungen ist es zur Vereinfachung des Verfahrens möglich, die Autorisierungsanfrage an das Payment-Gatway 5 asymmetrisch zu gestalten, d.h. nur der Kunde schickt eine Nachricht oder nur der Anbieter schickt eine Nachricht an das Payment-Gateway, um die Reservierungstransaktion einzuleiten. Auf eine Synchronisation wird in diesen Fällen verzichtet.

## Patentansprüche

1. Verfahren zur Nutzung und Abrechnung von Internet-Dienstleistungen über Mobilfunk, **dadurch gekennzeichnet,**
- **dass** ein Payment Gateway (5) eingerichtet wird, auf das ein Mobilfunk-Internet-Nutzer über ein Mobilfunkendgerät (1) und ein Anbieter über einen Anbieter-Server (4) zugreifen können, wobei Kundendaten des Nutzers zentral in einer Datenbank (6) des Payment-Gateway (5) gehalten werden,
- **dass** ein Micropayment-Konto (7) bei einer Bank (9) eingerichtet wird, wobei Payment-Gateway (5) und Micropayment-Konto (7) durch Datenbankabgleich ständig synchronisiert sind,
- **dass** der Nutzer bei Anwahl von kostenpflichtigem Internet-Inhalt vom Anbieter aufgefordert wird, die Bezahlung von Inhalten bis zu einem angeforderten Höchstbetrag zu autorisieren,
- **dass** die vom Anbieter geschickte Aufforderung Transaktionsdaten und einen Link auf das Payment-Gateway (5) enthält,
- **dass** der Anbieter diese Transaktionsdaten zusammen mit einer temporären IP-Adresse des Mobilfunk-Internet-Nutzers an das Payment-Gateway (5) überträgt,
- **dass** der Nutzer die Transaktionsdaten von seinem Endgerät (1) ebenfalls zum Payment-Gateway (5) überträgt,
- **dass** das Payment-Gateway (5) die empfangenen Transaktionsdaten synchronisiert und sie auf Übereinstimmung prüft, über die Nutzer-IP-Adresse die MSISDN des Mobilfunk-Internet-Nutzers ermittelt und mit dieser die zugehörigen in der Payment-Datenbank (6) abgelegten Kundendaten sucht, und den angeforderten Betrag auf dem Micropayment-Konto reserviert,
- **dass** der Anbieter vom Payment-Gateway (5) bei positiver Prüfung die Autorisierung für den reservierten Betrag erhält und über diesen Betrag verfügen kann-bis dieser erschöpft ist,
- **dass** bei Abschluss des Abbuchungsvorgangs von dem reservierten Betrag, der tatsächlich angefallene Betrag jeweils mit den Transaktionsdaten und der IP-Adresse des Nutzers an das Payment-Gateway (5) übertragen werden, und
- **dass** das Payment-Gateway (5) die angefallenen Beträge den Reservierungen zuordnet, die Beträge vom Micropayment-Konto (7) zu Gunsten des Anbieters abbucht und die entsprechenden Reservierungen löscht.

2. Verfahren nach Anspruch 1, **dadurch gekennzeichnet, dass** im Mobilfunkendgerät (1) keine elektronischen Geldbörsendaten und keine Nutzerdaten gehalten werden.

3. Verfahren nach einem der Ansprüche 1 oder 2, **dadurch gekennzeichnet, dass** der Nutzer jede Bezahltransaktion mit einer Bezahl-PIN sichern kann.

4. Verfahren nach einem der Ansprüche 1 bis 3, **dadurch gekennzeichnet, dass** sensible Daten sicher im Mobilfunknetz (2) verbleiben und nicht über das Internet (3) übertragen werden.

5. Verfahren nach einem der Ansprüche 1 bis 4, **dadurch gekennzeichnet, dass** die Authentifikation des Nutzers vom Mobilfunknetz (2) durchgeführt wird.

6. Verfahren nach einem der Ansprüche 1 bis 5, **gekennzeichnet durch** eine Verwendung von Händler-Software (Internet-)Paymentsystemen und internetfähigen Mobilfunk-Endgeräten (1).

## Claims

1. Method for the use and billing of internet services by mobile telephone, **characterised in that**
- a payment gateway (5) is set up, which can be accessed by a mobile telephone internet user via a mobile telephone terminal (1) and by a provider via a provider server (4), wherein client data of the user are kept centrally in a data bank (6) of the payment gateway (5),
- a micropayment account (7) is set up with a bank (9), wherein payment gateway (5) and micropayment account (7) are constantly synchronised by data bank matching,
- if chargeable internet contents is chosen, the user is asked by the provider to authorise payment for contents up to a requested maximum amount,
- the request sent by the provider contains transaction data and a link to the payment gateway (5),
- the provider transmits these transaction data together with a temporary IP address of the mobile telephone internet user to the payment gateway (5),
- the user transmits the transaction data from his terminal (1) likewise to the payment gateway (5),
- the payment gateway (5) synchronises the received transaction data and checks them for matching, through the user IP address determines the MSISDN of the mobile telephone internet user and with the MSISDN searches for the associated client data filed in the payment data bank (6), and sets aside the requested amount on the micropayment account,
- in case of a positive check, the provider obtains from the payment gateway the authorisation for the amount set aside and can draw on this amount until it is depleted,
- upon completion of the debit operation, from the amount set aside the amount actually incurred is transmitted in each case with the transaction data and the IP address of the user to the payment gateway (5), and
- the payment gateway (5) assigns the amounts incurred to the amounts set aside, debits the amounts incurred to the micropayment account (7) in favour of the provider, and deletes the corresponding amounts set aside.

2. Method according to claim 1, **characterised in that** no electronic purse data and no user data are kept in the mobile telephone terminal (1).

3. Method according to one of claims 1 or 2, **characterised in that** the user can secure each payment transaction with a payment PIN.

4. Method according to one of claims 1 to 3, **characterised in that** sensitive data remain securely in the mobile telephone network (2) and are not transmitted over the internet (3).

5. Method according to one of claims 1 to 4, **characterised in that** authentication of the user is carried out by the mobile telephone network (2).

6. Method according to one of claims 1 to 5, **characterised by** use of dealer software, (internet) payment systems and internet-capable mobile telephone terminals (1).

## Revendications

1. Procédé pour l'utilisation et la facturation de services Internet par téléphonie mobile, **caractérisé**
- **en ce qu**'on installe une passerelle de paiement (5) à laquelle un utilisateur d'Internet par téléphonie mobile et un fournisseur peuvent avoir accès respectivement par l'intermédiaire d'un terminal radiotéléphonique mobile (1) et d'un serveur de fournisseur (4), les données de client de l'utilisateur étant conservées de manière centrale dans une banque de données (6) de la passerelle de paiement (5),
- **en ce qu**'on installe un compte de micropaiement (7) chez une banque (9), la passerelle de paiement (5) et le compte de micropaiement (7) étant synchronisés en permanence grâce à un ajustement de la banque de données,
- **en ce que** l'utilisateur est invité par le fournisseur, lors du choix d'un contenu Internet payant, à autoriser le paiement de contenus jusqu'à une somme maximale exigée,
- **en ce que** l'invitation envoyée par le fournisseur contient des données de transaction et un lien vers la passerelle de paiement (5),
- **en ce que** le fournisseur transmet ces données de transaction, avec une adresse IP temporaire de l'utilisateur d'Internet par téléphonie mobile, à la passerelle de paiement (5),
- **en ce que** l'utilisateur transmet aussi à la passerelle de paiement (5) les données de transaction à partir de son terminal (1),
- **en ce que** la passerelle de paiement (5) synchronise les données de transaction reçues et vérifie leur conformité, détermine par l'intermédiaire de l'adresse IP d'utilisateur le numéro RNIS de station mobile de l'utilisateur d'Internet par téléphonie mobile et cherche avec ce numéro les données de client associées mises en mémoire dans la banque de données de paiement (6), et réserve sur le compte de micropaiement la somme demandée,
- **en ce que** le fournisseur reçoit de la passerelle de paiement (5), si la vérification est positive, l'autorisation pour la somme réservée et peut disposer de cette somme jusqu'à ce que celle-ci soit épuisée,
- **en ce que** lorsque l'opération de prélèvement de la somme réservée est terminée, la somme réellement due est transmise avec les données de transaction et l'adresse IP de l'utilisateur à la passerelle de paiement (5), et
- **en ce que** la passerelle de paiement (5) affecte les sommes dues aux réservations, prélève les sommes sur le compte de micro-paiement (7) au profit du fournisseur et annule les réservations correspondantes.

2. Procédé selon la revendication 1, **caractérisé en ce que** le terminal radiotéléphonique mobile (1) ne conserve pas de données de porte-monnaire électronique, ni de données d'utilisateur.

3. Procédé selon la revendication 1 ou 2, **caractérisé en ce que** l'utilisateur peut sécuriser chaque transaction de paiement avec un PIN de paiement.

4. Procédé selon l'une des revendications 1 à 3, **caractérisé en ce que** les données sensibles restent dans le réseau mobile (2) en étant protégées et ne sont pas transmises par l'Internet (3).

5. Procédé selon l'une des revendications 1 à 4, **caractérisé en ce que** l'authentification de l'utilisateur est effectuée par le réseau mobile (2).

6. Procédé selon l'une des revendications 1 à 5, **caractérisé par** une utilisation d'un logiciel de commerçant, de systèmes de paiement (par Internet) et de terminaux radiotéléphoniques mobiles (1) compatibles avec Internet.
